# EUROPEAN PATENT SPECIFICATION

(11) **EP 2 748 065 B1**
(45) Date of publication and mention of the grant of the patent: **29.03.2017**
(21) Application number: 11788726.5
(22) Date of filing: 15.11.2011
(51) Int. Cl.: B64D 11/00

(54) **SPLIT JOINT ASSEMBLY FOR MODULES USED ON MOBILE PLATFORMS**
GETEILTE VERBINDUNG FÜR MODULE AUF MOBILEN PLATTFORMEN
ENSEMBLE RACCORD FENDU POUR MODULES UTILISÉS SUR DES PLATEFORMES MOBILES

(43) Date of publication of application: 02.07.2014
(73) Proprietor: The Boeing Company, Chicago, IL 60606-1596 (US)
(72) Inventor: EGGING, Duane, Everett, Washington 98208 (US); KIM, Kyong S., Mill Creek, Washington 98012 (US); SEIERSEN, Douglas J., Lake Stevens, Washington 98258 (US)
(74) Representative: Witte, Weller & Partner Patentanwälte mbB
(86) International application number: PCT/US2011/060708
(87) International publication number: WO 2013/074082

(56) References cited:
- CH-A- 346 346
- DE-A1-102007 009 499
- US-A- 3 955 700
- US-A1- 2006 049 310
- US-A1- 2006 124 802
- US-A1- 2007 125 909
- US-B2- 8 025 252

## Description

### FIELD

The present disclosure relates to split joints for modules used on mobile platforms, such as commercial aircraft, and particularly to a stress-transferring split joint that involves fewer fasteners to assemble and disassemble.

### BACKGROUND

The statements in this section merely provide background information related to the present disclosure and may not constitute prior art.

On mobile platforms, such as commercial aircraft, large interior modules or monuments, e.g. galleys, crew rests, larger closets and some partitions, are designed to be inserted into or removed from an airplane after the major parts of the fuselage are joined together and the airframe structure is substantially complete. For example, crew rests are often provided as large, pre-assembled, and free-standing modules or monuments. The pre-assembled module adds extra weight to the mobile platform due to the internal support and bracketry of the pre-assembled monument. The heavy weight and pre-assembled attributes may make some modules difficult or awkward to install.

Consequently, crew rests and other large modules are frequently designed to be broken down into components that will fit through aircraft doors. To facilitate this, most large modules or monuments are configured with a split joint incorporated into the design. Current monument split joints involve many fasteners (as many as 100 or more) and large shear plates to carry operational loads from one component of a monument to the other once they are attached. The large number of fasteners increases the time and cost associated with installing or removing them. Also, current split joints are generally considered unsightly, and it is considered desirable to provide covers if they are exposed to the interior of the aircraft cabin.

The document US 8,025,252 B2 discloses a modular wall construction system for aircraft cabins. The document CH 346 346 A discloses a construction element for forming structures having several sides.

It has been recognized that it would be desirable to provide split joints for mobile platform modules that are simpler and easier to connect and disconnect, yet still provide adequate mechanical load
transmission. It would also be highly desirable to have split joints for mobile platform modules that are aesthetically pleasing.

### SUMMARY

The present invention is defined by the independent claims 1 and 11. It is disclosed a module for a mobile platform, having a split joint includes first and second module portions, having an interface between the portions. A receiver is coupled to the first portion, and a beam extends from the second portion. The beam is configured to attach to the receiver across the interface. Interlocking tongue and groove structure is disposed on the first and second portions at the interface. Connection of the beam and receiver causes the tongue and groove structure to interconnect.

Further, it is disclosed an aircraft, including an airframe, including a fuselage having an interior and a door opening to the interior. A module is disposed within the interior of the fuselage. The module includes first and second portions, which are sized to fit through the door opening when the aircraft is substantially assembled. The module further includes a split joint at an interface between the first and second portions. A receiver is coupled to the first portion, and a beam, extends from the second portion. The beam is fastened to the receiver across the interface. Interlocking tongue and groove structure is disposed on the first and second portions at the interface. The beam and tongue and groove structure transmits mechanical stress between the first and second portions.

Even further it is disclosed a method for joining first and second portions of a module of a mobile platform. The method includes mating opposing tongue and groove structure of adjacent sections of the portions along an interface, and attaching a beam to each of the portions across the interface, the beam holding the tongue and groove structure together.

The features, functions and advantages that have been discussed can be achieved independently in various embodiments or may be combined in yet other embodiments, further details of which can be seen with reference to the following description and drawings.

### BRIEF DESCRIPTION OF THE DRAWINGS

The drawings described herein are for illustration purposes only and are not intended to limit the scope of the present disclosure in any way.
FIG. 1 is a side view of a mobile platform, in this example a commercial aircraft, with a portion of the fuselage broken away to illustrate an exemplary embodiment of a crew rest module at a forward end of the aircraft;
FIG. 2 depicts an environmental view of a crew rest module in the aircraft;
FIG. 3 is a side view of a crew rest module having a single-seat configuration;
FIG. 4 is a top view of the single-seat crew rest module depicted in FIG. 3;
FIG. 5 is a perspective view of the assembled structural portion of a crew rest bunk module having an embodiment of a split joint in accordance with the present disclosure;
FIG. 6 is an exploded perspective view of the bunk module of FIG. 5, showing the left and right side portions of the module and the split joint separated;
FIG. 7 is a close-up, top perspective view of the separated split joint of FIG. 6;
FIG. 8 is a close-up, bottom perspective view of the separated split joint of FIG. 6;
FIG. 9 is a perspective view of a prior art splice joint; and
FIG. 10 is an exploded perspective view of the prior art splice joint of FIG. 9.

### DETAILED DESCRIPTION

Illustrative embodiments are described below as they might be employed in a splice joint assembly. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Further aspects and advantages of the various embodiments will become apparent from consideration of the following description and drawings. These embodiments are described in sufficient detail to enable those skilled in the art to practice the invention, and it is to be understood that modifications to the various disclosed embodiments can be made, and other embodiments can be utilized, without departing from the spirit and scope of the present invention. The following detailed description is, therefore, not to be taken in a limiting sense.

As noted above, large interior modules or monuments for mobile platforms, such as aircraft, are often designed to be inserted into or removed from the mobile platform after the major parts are joined together and the structure is substantially complete. For example, crew rests, galleys and other large modules for aircraft are frequently designed to be broken down into components that will fit through aircraft doors. To facilitate this, most large modules or monuments are configured with at least one split joint incorporated into the design.

Unfortunately, current monument split joints typically involve many fasteners (e.g. 100 or more) and large shear plates to connect and transmit loads from one component of a monument to the other, once they are attached. The large number of fasteners increases the time and cost associated with installing or removing the module. Also, current split joints are generally considered unsightly, and it is desirable to provide covers if they are exposed to the interior of the aircraft cabin.

Advantageously, a split joint has been developed that is simpler and easier to connect and disconnect, yet still provides adequate mechanical load transmission, and is generally aesthetically pleasing. The split joint described herein reduces the number of fasteners, and makes disassembly and reassembly faster, cleaner and far less complicated than previous methods. It also gives a clean appearance in visible areas. While the following disclosure shows and describes a split joint assembly in the context of an aircraft crew rest module, the disclosure is not limited to that application alone. It is to be understood that the application shown herein is only one example. One of skill in the art will recognize that the split joint assembly disclosed herein can be applied to a wide range of enclosures, modules, etc., including but not limited to those for use in aircraft, buses, trains, ships, etc.

Commercial aircraft, especially those designed for very long distance travel, are frequently provided with a crew rest area, where, for example, a relief crew can rest before taking over operation of the aircraft, and where crew members and attendants can rest during a long flight, away from the activities taking place on board the aircraft, and with a degree of privacy. Since space on board an aircraft is very limited, space for a crew rest is often found at the forward or aft end of the aircraft, in a passenger cabin area, or near the flight deck, depending upon the size and configuration of the particular aircraft. In one example, a crew rest has been positioned in an overhead area above the passenger cabin, in the crown of the aircraft.

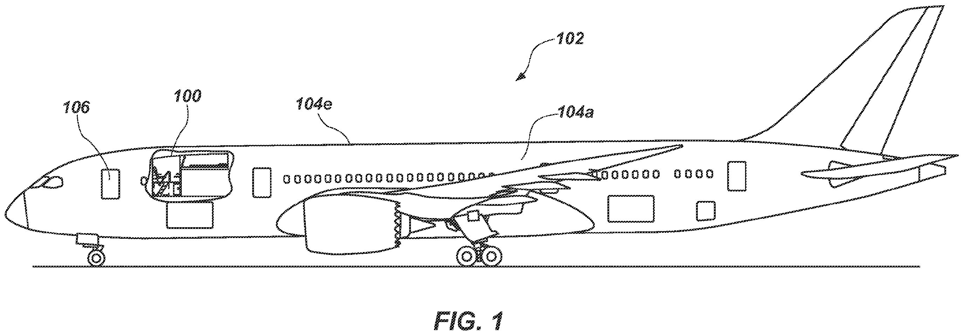

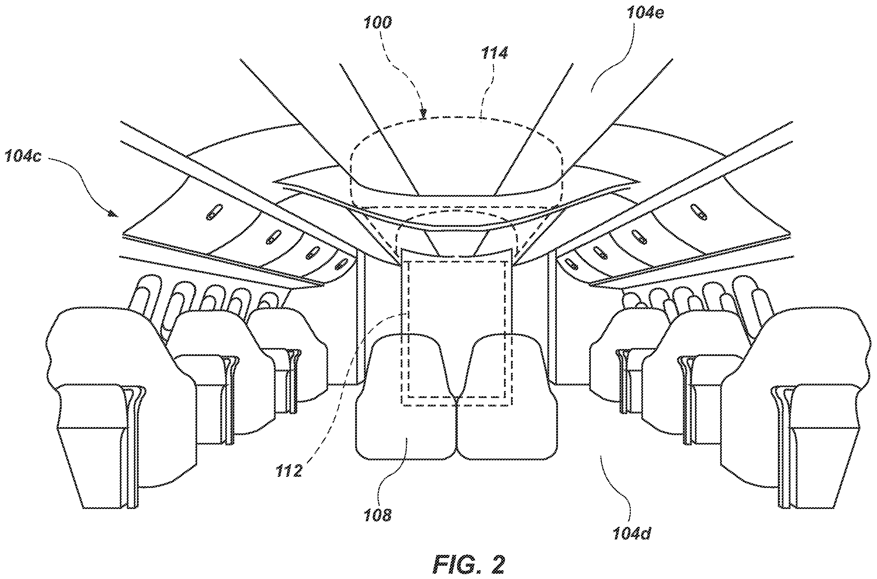

Referring to FIGS. 1 and 2, there is shown a crew rest module 100 inside a mobile platform, in this case a commercial aircraft 102. As is well known, the airframe of the aircraft 102 includes a fuselage 104a, a frame (not shown), an interior cabin 104c, a floor 104d in the cabin, a crown 104e, and a main cabin door 106. The aircraft 102 can optionally include a central seating section 108. The crew rest module 100 is shown disposed at a forward portion of the aircraft 102, but it could easily be incorporated at a different location, and a given aircraft can include multiple crew and/or attendant rest modules.

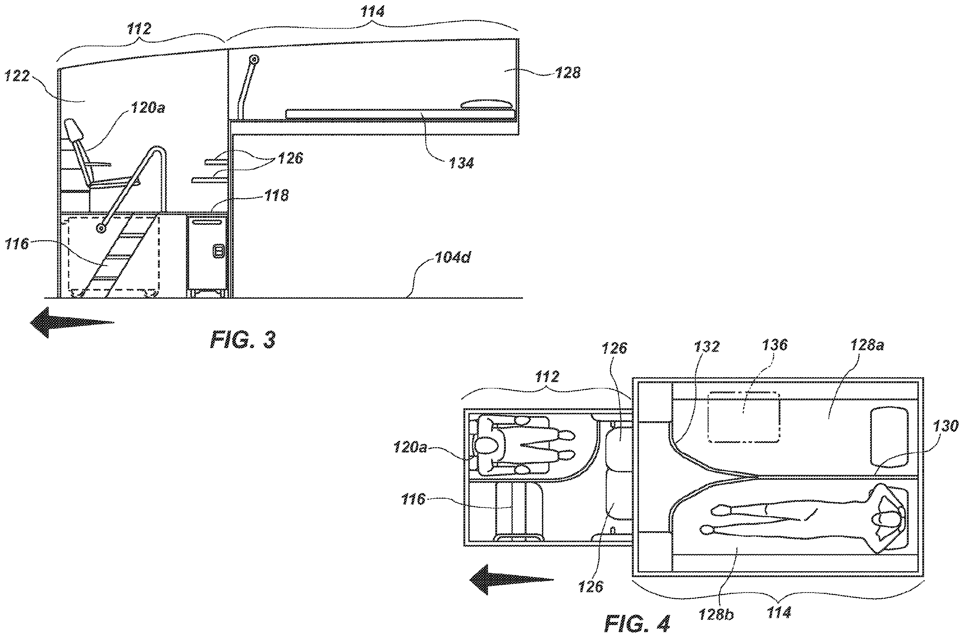

Referring to FIGS. 3 and 4, one embodiment of a crew rest module 100 is shown in greater detail. The darkened arrows on FIGS. 3 and 4 point towards the forward portion of the aircraft 102 with respect to this particular example. The crew rest module 100 contains an entrance module 112 and a bunk module 114. The entrance module 112 includes a first stairway 116 by which a crew member can access the crew rest module 100 from within the aircraft 102. The stairway 116 leads to an elevated platform 118 with a first seat 120a. The elevated platform 118 can be set at a height to provide a stowage area 124 underneath the seating area 122 for stowage of galley carts, etc. The entrance module 112 for a crew rest 100 like that shown in FIGS. 3 and 4 can be configured to have seating for one crew member, as shown, or for more than one crew member.

The elevated platform 118 includes a second stairway 126 to provide passage from the seating area 122 to either a right or left region of the bunk module 114, respectively. In the embodiment shown, the bunk module 114 includes two berths 128a, b, which are suitably sized to provide comfortable spacing for a crew member to comfortably recline or repose within the berth 128. The berths 128 can be separated by a partial wall 130 and optionally by a curtain 132 or other privacy enhancing barrier. Each berth 128 can include a mattress 134 and other amenities for the comfort of the user, such as audio and video devices, internet access ports, security cameras, individual temperature control, alarm clock, intercom, in flight monitors, small stowage for personal effects, etc. (not shown). A typical berth 128 can have a length of about 78 inches, a width of at least about 30 inches, and a volume of about 35 cubic feet.

Referring to FIG. 2, in aircraft that have a center seating section 108, the crown space 104e of the aircraft fuselage above a region of the center seating section 108 can be used to accommodate the bunk module 114. Using the crown space above the center seating section 108 limits the footprint of the crew rest module 100 to only that of the entrance module 112. Advantageously, the overhead bunk module 114 does not encroach upon the overhead space of passengers in the central seating section 108, and therefore does not interfere with their enjoyment of personal space in the aircraft 102.

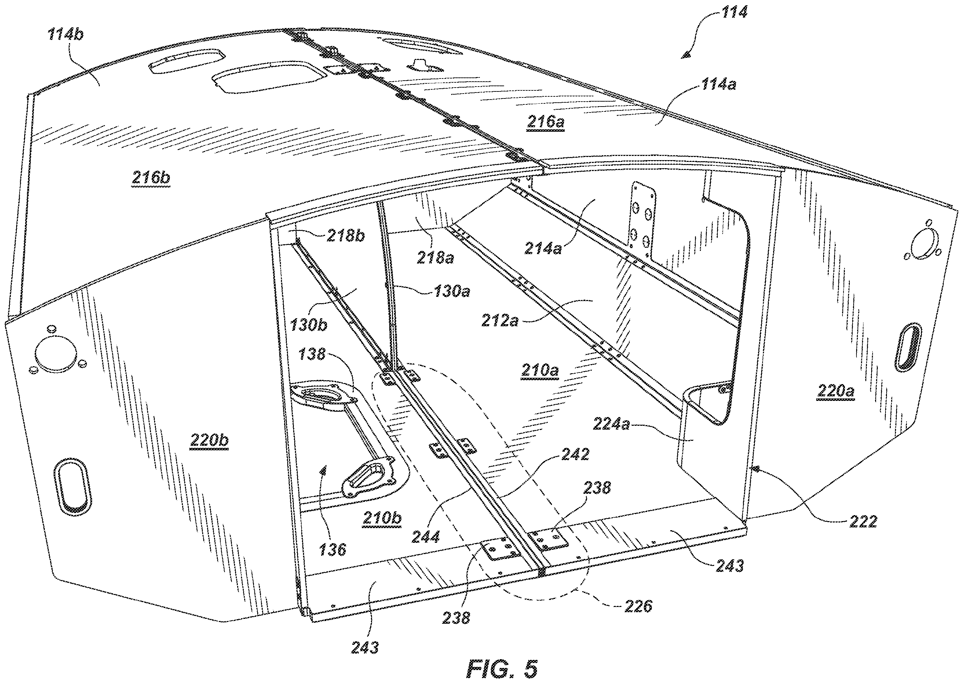

The bunk module 114 can also include an alternate egress 136 for use in case of emergency. The alternate egress 136 can be defined by an opening frame (138 in FIGS. 5-8) in a floor of a berth 128, and can be accessed by displacing any padding, such as the mattress 134, and removing a removable barrier mechanism, such as a blow-out panel, a hinged door, a removable panel, or a locking door (not shown).

As noted above, the crew rest 100 can be a modular system that is installed after the aircraft 102 is substantially assembled. The entrance module 112 and the bunk module 114 have a plurality of peripheral walls which can be at least partially or fully assembled prior to installation into the aircraft. Accordingly, subassemblies of the entrance module 112 and bunk module 114 can be sized to fit through the cabin door 106 of the aircraft 102.

Referring to FIGS. 5-8, various views are provided of an embodiment of an overhead bunk module 114 configured in accordance with the present disclosure. These views are of the basic structural components of the bunk module, and do not show all details of a finished construction. Viewing FIG. 5, the bunk module 114 includes a left half 114a, and a right half 114b. As used herein, the terms "left" and "right" are with respect to the orientation of the aircraft into which this bunk module is to be installed. Because the views of FIGS. 5-8 are looking aft with respect to this module's placement in the aircraft, the directions "left" and "right" are reversed in these views. Thus elements designated "left" appear on the right side of these figures, and those designated "right" appear on the left side of the figure.

Each half of the bunk module 114 includes four bunk module peripheral panels, including a floor or base panel 210a, b, lower side quarter panels 212a, b, side panels 214a, b, and arched top panels 216a, b. The top panels 216a, b can be secured to the crown 104e of the aircraft 102, while the base panels 210a, b support the bunk area above the passenger compartment. The bunk module 114 also includes back walls 218a, b, center partial divider walls 130a, b, and front walls 220 a, b, which define a front opening 222 for ingress and egress of users of the bunk module. The front opening 222 is configured to mate with the entrance module 112 to provide access to the bunk module. In one embodiment, the entire bunk module is about 32" high, 68" wide, and 103" long. With these dimensions, the left and right halves of the bunk module 114 are sized to fit through a passenger or other door of the aircraft when the aircraft is substantially assembled.

The panels can be of a variety of materials, such as lightweight composite panels (e.g. fiberglass, honeycomb panels, etc.), which are frequently used in aircraft construction. It will be apparent that other materials can also be used in various embodiments and applications. The thickness of these panels can vary, depending on the type of panel and the particular installation. For example, in one embodiment the floor panels 210 and the side wall panels 214 of the bunk module 114 are of 3/4" thick honeycomb core material.

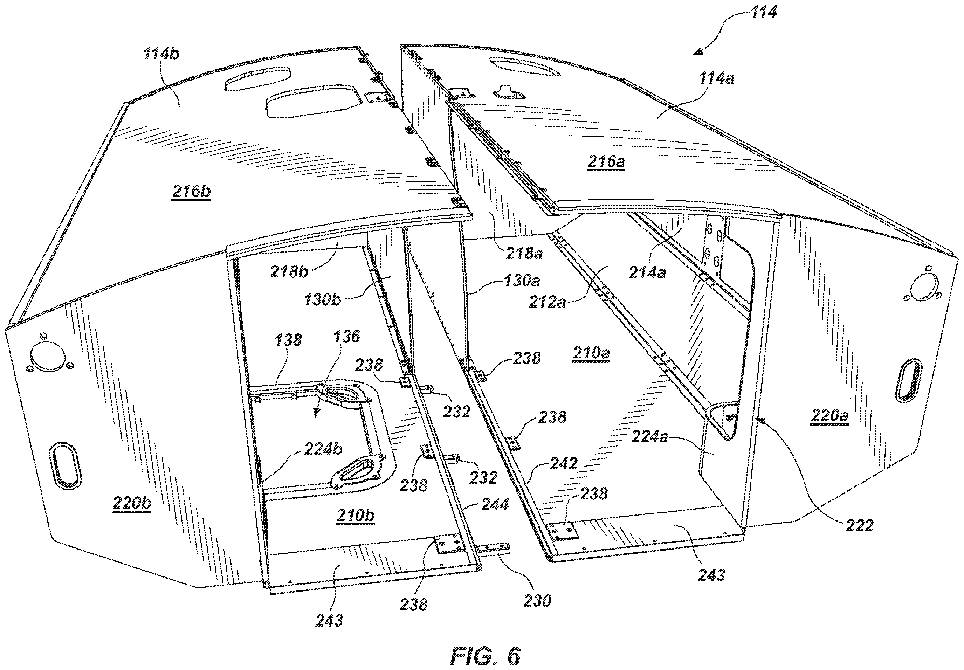

The bunk module 114 can also include a variety of openings and other features that are useful, such as curved panels 224a, b (224b being visible in FIGS. 6-8) defining a closet area in each module half, as well as various openings and attachment points for features of the finished bunk module, such as individual temperature and ventilation control, lights, audio and video devices, and other amenities as discussed above. Also visible in FIG, 5 is the frame 138 of the alternate egress 136, which is disposed in the floor of the right bunk module 114a.

Advantageously, the bunk module halves 114a, b are connected together, at least in part, by a split joint assembly in accordance with this disclosure, outlined by the dashed line 226 in FIG. 5. Provided in FIG. 6 is a perspective view showing the left and right halves 114a, b, of the bunk module separated along the split joint 226. While the various panels of each bunk module half can be secured together using various types of joints, such as tab and slot joint, the split joint 226 greatly increases the speed and simplicity of connection or detachment of the bunk module halves.

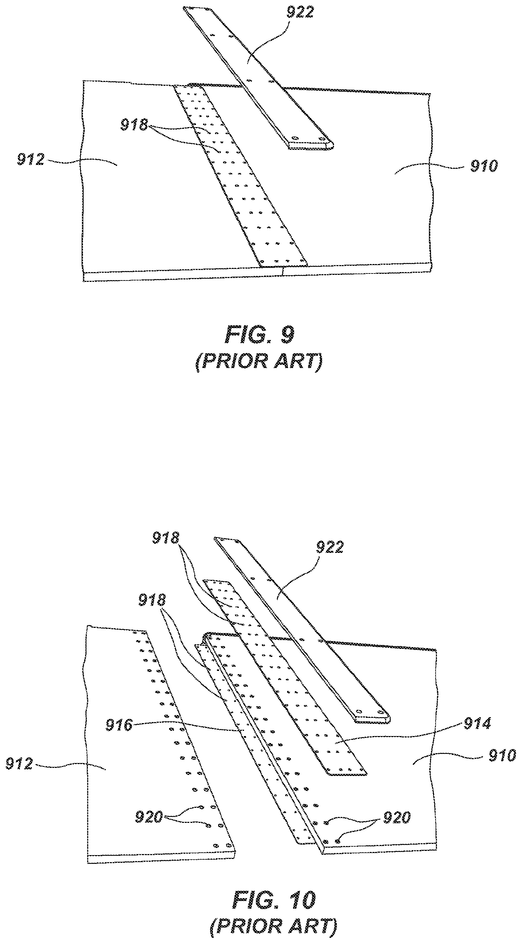

It will be apparent that it is desirable that the floor panels 210a, b of the bunk module 114 are connected together in a manner that transmits mechanical stress between the joined panels. In the absence of the split joint assembly described herein, the bunk module halves 114a, b might be joined with a conventional splice joint. Shown in FIGS. 9 and 10 are perspective views of a conventional splice joint. This type of joint is shown assembled in FIG. 9, and exploded in FIG. 10. This type of joint connects a first panel 910 and a second panel 912 using a first shear plate 914 and a second shear plate 916. In the context of an aircraft application, the panels can be lightweight composite panels, such as of fiberglass, honeycomb construction, etc. The shear plates are likely to be metal plates, such as of aluminum. It can be seen that the shear plates include a large number of holes 918 for fasteners, and the panels likewise include a large number of fastener holes 920. While this type of joint can adequately transmit forces between adjacent panels, its installation involves a large number of fasteners (e.g. screws), which increases the time and complexity of the installation. Moreover, since the finished joint is somewhat unsightly, where the joint is visible in the interior of a passenger cabin, for example, a joint cover piece 922 is often used to improve the aesthetic appearance, thus also contributing to the cost and complexity of the installation.

Advantageously, the split joint assembly disclosed herein greatly reduces the number of fasteners involved in connecting parts of an enclosure, such as a module for an aircraft or other mobile platform, and provides a more aesthetically pleasing installation, while still providing adequate transmission of mechanical stress between adjacent panels. Referring back to FIG. 6, the split joint assembly 226 connects the left floor panel or first portion 210a of the bunk module to the right floor panel or second portion 210b of the bunk module along an interface - i.e. the region where the first portion and the second portion abut.

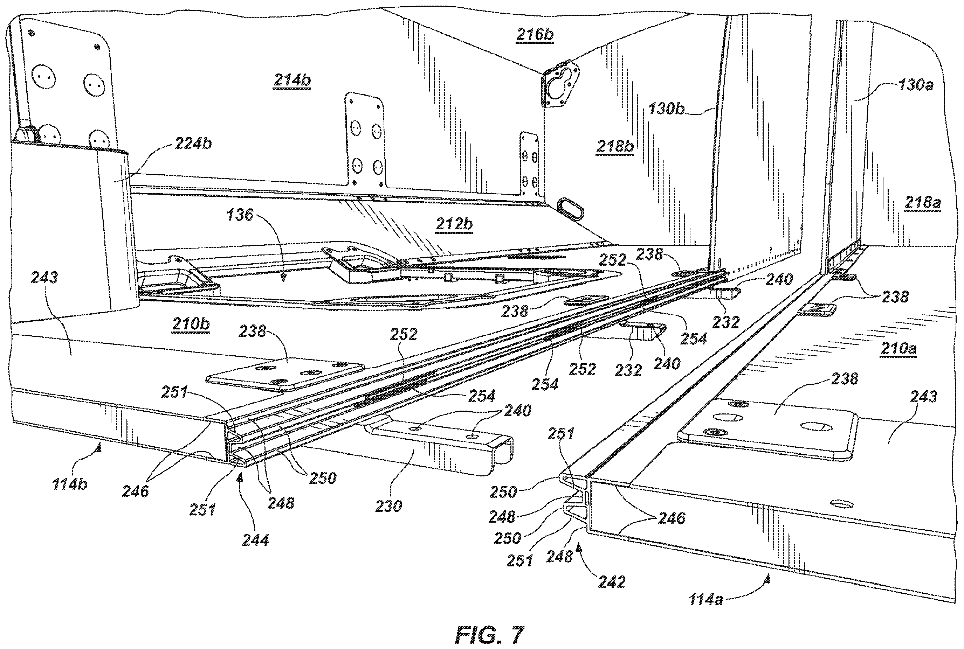

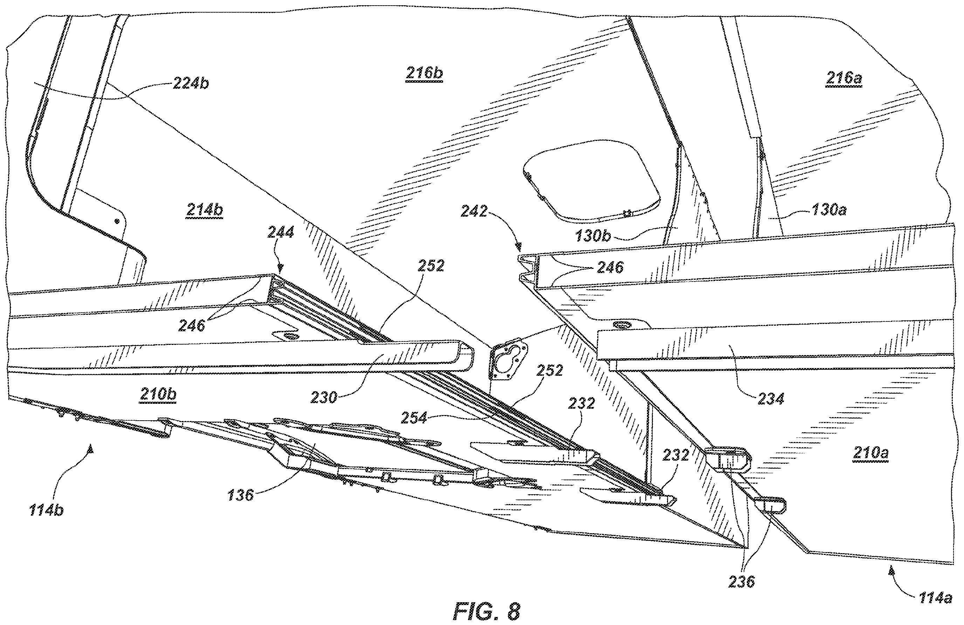

The split joint assembly 226 is shown in more detail in FIGS. 7 and 8. Extending from the right floor panel 210b are a plurality of extension beams, including a forward extension beam 230 and aft extension beams 232. While the embodiment shown in FIGS. 7 and 8 includes three extension beams 230, 232, a split joint in accordance with this disclosure can have one extension beam or many more than one, depending on its size and other considerations. Similarly, as shown in FIG. 8, coupled to the left panel 210a are several receivers, including a forward receiver 234 and aft receivers 236, one receiver corresponding to each extension beam 230, 232.
The extension beams and receivers can have a variety of configurations. As can be seen in FIG. 8, in this embodiment the forward extension beam 230 is a channel or beam (e.g. of aluminium) that extends along the underside of the forward extent of the right floor panel 210b of the right bunk module half 114b. Similarly, the forward receiver 234 is a channel or beam (e.g. of aluminum) that extends along the underside of the forward extent of the left floor panel 210a of the left bunk module half 114a. The forward receiver 234 receives the free end of the forward extension beam 230 of the right panel 210b in a male-female interconnecting fashion. That is, the free end of the forward extension beam 230 slides into the channel shape of the forward receiver 234, so that when the bunk module halves are joined, a segment or portion of the forward extension beam 230 is disposed within the forward receiver 234. In this way, the extension beam 230 and the forward receiver 234 provide a substantially continuous beam across the bottom of the floor panels 210 of the forward region of the bunk module 114, thus transmitting bending forces across the interface, as well as holding the panels together at the interface.

The aft extension beams 232 and aft receivers 236 are configured slightly differently, but operate generally the same. The aft extension beams 232 are relatively short channel or beam sections that are attached to the underside of the right floor panel 210b, and the aft receivers 236 are short channel sections that are attached to the underside of the left floor panel 210a. The free end of each aft extension beam 232 slides into the corresponding aft receiver 236, which places the beam in position to be attached to the left floor panel 210a across the interface. In one embodiment, the aft extension beams 232 are of aluminum, and the aft receivers 236 are of nylon, so as to promote smooth interconnection of the two bunk halves.

Referring to FIG. 7, the right and left floor panels 210b,a include several countersink pads 238 above the extension beam connection areas. These countersink pads (e.g. of aluminum) provide a thickness into which fasteners can be countersunk in the floor, and also provide additional strength to the connection. It can be seen from this view that the forward extension beam 230 includes two fastener holes 240 in its free end, and the aft extension beams 232 each include one fastener hole 240 in their free ends. When the two halves of the bunk module 114 are brought together, the extension beams slide into their respective receivers under the left floor panel 210a, and fasteners are then fastened down through the
countersink pads 238, through the floor panel 210a, through the receiver 234, 236, and into the fastener hole of the extension beam. A variety of fasteners can be used, including screws, bolts, rivets, etc.

In this embodiment, connection of the split joint 226 involves attachment of only four fasteners total, no more than two fasteners for any one extension beam, in comparison to perhaps hundreds of fasteners in conventional splice joints (e.g. as shown in FIGS. 9 and 10). Thus the extension beam configuration can include a plurality of beams and the receiver includes a plurality of receivers, the beams being fastened between the first and second portions of the module across the interface and to a respective receiver.

It is also noted that in the embodiment of FIGS. 5-8, the forward end of the floor panels 210 also include a metal shear plate 243, which provides additional strength and durability for the panel in the entrance region of the bunk module. It can be seen from FIGS. 6 and 7 that the forward countersink pad 238 overlies this plate, and the fasteners for the extension beams thus also pass through this plate.

The extension beams 230, 232 act as guides when bringing the two halves 114a, b of the module 114 together, and also mechanically hold the interlocking tongue and groove interconnection together at the interface to transmit stress between the panels 210a, b. Referring again to FIGS. 7 and 8, a first metal extrusion 242 is disposed along the edge of the left floor panel 210a, and a second metal extrusion 244 is disposed along the edge of the right floor panel 210b on opposing sides of the interface of the module halves. The extrusions can be of aluminum, and can include upper and lower flanges 246, which wrap around and are bonded to the edge of the respective floor panels using adhesive or some other attachment method.

As best shown in FIG. 7, the extrusions 242, 244 provide a tongue and groove interlocking feature which transmits bending and shear forces between the adjacent panels. At least one of the extrusions 242, 244 provides at least one groove 248, while the opposing extrusion includes at least one rib or tongue 250, which fits into the corresponding groove. It is to be understood that while the tongue and groove structure is shown as including a pair of metal extrusions attached to the edges of the panels, a tongue and groove structure can be created in other ways. For example, depending on the material of the panels, a tongue and groove shape can be formed (e.g. cut or machined) directly in an edge of each adjacent panel. Alternatively, metal castings or polymer materials can be shaped into matching tongue and groove pieces, which can be attached to edges of adjacent panels or surfaces. Many other alternatives are possible as well.

In the embodiment shown in the figures, the extrusions 242, 244 are substantially identical image structures, though inverted from each other in the installation, to provide a matching tongue and groove pair with two tongues 250 and two grooves 248 each. The geometry of these extrusions cause the upper and lower surfaces of the respective floor panels 210 to be substantially planar when the joint is coupled together. It will be apparent that the number, size and geometry of the tongues and grooves can vary, depending on the materials, loads and other factors associated with a given split joint installation. In one embodiment, the extrusions 242, 244 are of 0.050" thick aluminum, the tongues 250 extend about 0.375" from root to tip (with the grooves 248 having a corresponding depth), and the angled bearing surfaces 251 of the tongues and grooves have an angle of about 75°.

As an additional feature, the rib or tongue 250 of at least one of the metal extrusions 242, 244 can include a ridge 252, which extends outwardly from the tongue 250, and fits into a corresponding slot 254 of the corresponding groove 248. The ridges 252 can be created by machining away unwanted portions of a continuous rib on the tongue 250 of the respective extrusion, and the slots 254 can be created by machining a slot directly into the trough of the opposing groove 248 at the corresponding location. As shown in FIG. 7, several ridges and slots can be provided along the length of the tongue and groove joint. While FIGS. 7 and 8 only show ridges 252 and slots 254 on one side of the tongue and groove joint, it is to be understood that these features can be provided on both sides. The interconnection of the ridge 252 and slot 254 provides additional mechanical contact between the edges of the two panels 210, and thus increases the transmission of stress therebetween.

With the split joint disclosed herein, joining portions of a module or enclosure along an interface is greatly simplified. The worker(s) simply mate opposing interlocking tongue and groove structures of the adjacent edges of panels along the interface, and attach one or more beams to the panels across the interface. Attaching the beams involves attaching the beam to a panel of a first portion of the module, and inserting the beam into a receiver attached to a second portion of the module. As shown in FIGS. 5-8, the beams 230, 232 can be on an exterior of the module, to improve the aesthetic appearance of the interior of the module and reduce the need for covers or other features for merely aesthetic purposes. It will be apparent that the beams can be located in any desired position of a split joint connection. For example, the beams and receivers can be located on the top or sides as well. In some embodiments, the beam or beams can be attached to each panel across the interface with no more than two fasteners, thus greatly speeding the installation.

Mating the tongue and groove structure can further include inserting a ridge, extending from a tongue of the tongue and groove structure of one panel, into a slot disposed in a groove of the tongue and groove structure of the opposing panel. Where the panels are of lightweight materials, the method can include attaching a first tongue and groove member, such as a metal extrusion, along an edge of a panel of one of the portions, and attaching a second tongue and groove member, such as a matching or mirror image extrusion, along an edge of an opposing panel of the other one of the portions.

It should be recognized that the split joint described herein is not limited to horizontal joints or floor joints. Vertical joints between walls, ceiling joints, and other joints can also be connected with a split joint as described herein. Additionally, split joints can be used to attach more than two enclosures or modules together in many different ways. Those of skill in the art will also recognize that the size, shape and configuration of the split joint components can vary depending on the application. For example, a vertical joint between wall segments may involve lower bending and shear forces, and thus can be configured with extension beam and tongue and groove structures that are smaller, thinner, or of lower strength and weight.

While spaces or gaps within tab and slot joints or splice joints of modules are sometimes filled with an adhesive to solidify the modular components, the split joint described herein can be left without adhesive. The physical contact of the tongue and groove connection can be adequate to transmit shear and bending forces between adjacent panels, and the extension beams, fitted into their respective receivers and affixed with fasteners to the respective panels, hold the panels and the tongue and groove structure together and also contribute to stress transmission. Moreover, the absence of adhesive contributes to the rapidity with which the joint can be assembled and disassembled, allowing the two halves of the bunk module, or any two modules that are to be connected, to be rapidly connected or disconnected by inserting or removing only a small number of fasteners associated with the extension beams. The split joint thus reduces the cost and complexity of modules, without sacrificing space and/or compromising their structural integrity. Using interconnecting male and female support beams on an underside or outside of a module to connect two or more portions together at an interface, with an interlocking tongue and groove structure along opposing edges of the portions at the interface provides a strong yet easily constructed joint.

Although this split joint assembly has been described in terms of certain specific embodiments, other embodiments that are apparent to those of ordinary skill in the art, including embodiments that do not provide all of the features set forth herein, are also within the scope of this disclosure. Those skilled in the art will recognize that the teachings contained herein can be practiced with various modifications within the scope of the claims. Accordingly, the scope of the present disclosure is defined only by reference to the appended claims and equivalents thereof.

## Claims

1. A module (100) for a mobile platform (102), having a split joint (226), comprising:
first and second module portions (114a,b) comprising panels (210a,b),
an interface between the portions (14a,b);
a receiver (234, 236) coupled to the panel (210a) of the first portion (114a);
a beam (230, 232) attached to the panel (210b) of the second portion (114b) and extend-ing from the second portion (114b), the beam (230) configured to be inserted into the receiver (234, 236) and to be attached to the panel (210a) of the first portion for fastening, by affixing with fasteners,
the beam (230) between the first and second portions across the interface as well as to the receiver (234, 236) across the interface; and
interlocking tongue and groove structure (242, 244), disposed on the first and second portions (114a,b) at the interface, connection of the beam (230, 232) and receiver (234, 236) causing the tongue and groove structure (242, 244) to interconnect.

2. A module in accordance with claim 1, wherein the beam (230) comprises a plurality of beams (230, 232) and the receiver (234, 236) comprises a plurality of receivers (234, 236), the beams (230, 232) being attachable between the first and second portions (114a,b) and to a respective receiver (234, 236).

3. A module in accordance with claim 2, wherein the first and second module portions (114a,b) have an exterior, and the beams (230, 232) and receivers (234, 236) are disposed on the exterior of the first and second portions (114a,b).

4. A module in accordance with claim 1 wherein the beam (230, 232) and receiver (234, 236) comprises a male-female interconnecting structure.

5. A module in accordance with claim 1, wherein the beam (230, 232) is fastened to each portion (114a,b) and to the respective receiver (234, 236) with no more than two fasteners.

6. A module in accordance with claim 1, wherein the first and second module portions (114a.b) comprise panels (210a,b) having opposing edges, the interlocking tongue and groove structure (242, 244) comprising metal extrusions (242, 244), bonded to the opposing edges at the interface.

7. A module in accordance with claim 1, wherein the interlocking tongue and groove structure (242, 244) further comprises a ridge (252), outwardly extending from a tongue (250) associated with a first of the portions (114a), and a slot disposed in a corresponding groove (248) of the second of the portions (114b), the slot configured to receive the ridge (252) thereinto.

8. A module in accordance with claim 1. wherein the interlocking tongue and groove structure (242, 244) comprises at least two tongues (250) and two grooves (248) on each of the first and second portions (114a,b).

9. A module in accordance with claim 1, for being installed in an aircraft having a door (106).

10. A module in accordance with claim 9, wherein the module (102) comprises a crew rest, each module portion (114a,b) being sized to fit through the door (106) of the aircraft (102) when the aircraft (102) is substantially assembled.

11. A method for joining the first and second portions (114a,b) of the module (114) defined in claim 1, comprising:
mating the opposing tongue and groove structure (242, 244) of adjacent sections of the portions (114a,b) along the interface; and
attaching the beam (230, 232) to each of the portions (114a,b) across the interface, by affixing with fasteners, the beam (230) holding the tongue and groove structure (242, 244) together.

12. A method in accordance with claim 11, wherein the beam (230, 232) is fastened to each panel (210) with no more than two fasteners.

13. A method in accordance with claim 11, wherein the module has an exterior, and attaching the beam comprises attaching a plurality of beams across the interface on the exterior.

14. A method in accordance with claim 11, wherein mating the tongue and groove structure further comprises inserting a ridge, extending from a tongue of one portion, into a slot disposed in a groove of the other portion.

## Patentansprüche

1. Modul (100) für eine mobile Plattform (102) mit einer Spaltverbindung (226), das aufweist:
erste und zweite Modulabschnitte (114a,b), die Platten (210a,b) aufweisen;
eine Schnittstelle zwischen den Abschnitten (114a,b);
eine Aufnahme (234, 236), die an die Platte (210a) des ersten Abschnitts (114a)
gekoppelt ist;
einen Träger (230, 232), der an der Platte (210b) des zweiten Abschnitts (114b) angebracht ist und der sich von dem zweiten Abschnitt (114b) erstreckt, wobei der Träger (230) zum Einfügen in die Aufnahme (234, 236) und zum Anbringen an der Platte (210a) des ersten Abschnitts zum Befestigen, durch Befestigen mit Befestigungen, des Trägers (230) zwischen den ersten und zweiten Abschnitten über die Schnittstelle sowie an der Aufnahme (234, 236) über die Schnittstelle eingerichtet ist; und
Ineinanderbringen einer Feder-Nut-Struktur (242, 244), die an den ersten und zweiten Abschnitten (114a,b) bei der Schnittstelle angeordnet ist, wobei eine Verbindung des Trägers (230, 232) und der Aufnahme (234; 236) die Feder-Nut-Struktur (242, 244) ineinandergreifen lässt,

2. Modul nach Anspruch 1, wobei der Träger (230) eine erste Vielzahl von Trägern (230, 232) aufweist und die Aufnahme (234, 236) eine Vielzahl von Aufnahmen (234, 236) aufweist, wobei die Träger (230, 232) zwischen den ersten und zweiten Abschnitten (114a, b) und an einer jeweiligen Aufnahme (234, 236) anbringbar sind.

3. Modul nach Anspruch 2, wobei die ersten und zweiten Modulabschnitte (114a,b) eine Außenseite aufweisen und wobei die Träger (230, 232) und die Aufnahmen (234, 236) an der Außenseite der ersten und zweiten Abschnitte (114a,b) angeordnet sind.

4. Modul nach Anspruch 1, wobei der Träger (230, 232) und die Aufnahme (234, 236) eine Mann-Frau-Verbindungsstruktur aufweisen.

5. Modul nach Anspruch 1, wobei der Träger (230, 232) an jedem Abschnitt (114a,b) und an der jeweiligen Aufnahme (234, 236) mit nicht mehr als zwei Befestigungen befestigt ist.

6. Modul nach Anspruch 1, wobei die ersten und zweiten Modulabschnitte (114a,b) Platten (210a,b) mit gegenüberliegenden Kanten aufweisen, wobei die ineinandergreifende Feder-Nut-Struktur (242, 244) Metallpresslinge (242, 244) aufweist, die bei der Schnittstelle an die gegenüberliegenden Kanten gebunden sind.

7. Modul nach Anspruch 1, wobei die ineinandergreifende Feder-Nut-Struktur (242, 244) einen Grat (252), der sich von einer Feder (250) nach außen erstreckt, die mit einem ersten Abschnitt der Abschnitte (114a) verknüpft ist, und einen Schlitz aufweist, der in einer entsprechenden Nut (248) des zweiten Abschnitts der Abschnitte (114b) angeordnet ist, wobei der Schlitz zum Aufnehmen des Grats (252) eingerichtet ist.

8. Modul nach Anspruch 1, wobei die ineinandergreifende Feder-Nut-Struktur (242, 244) zumindest zwei Federn (250) und zwei Nuten (248) an jedem der ersten und zweiten Abschnitte (114a,b) aufweist.

9. Modul nach Anspruch 1 zum Einbauen in ein Luftfahrzeug mit einer Tür (106).

10. Modul nach Anspruch 9, wobei das Modul (102) einen Mannschaftsraum aufweist, wobei jeder Modulabschnitt (114a,b) so dimensioniert ist, dass er durch die Tür (106) des Luftfahrzeugs (102) passt, wenn das Luftfahrzeug (102) im Wesentlichen zusammengebaut wird.

11. Verfahren zum Verbinden der ersten und zweiten Abschnitte (114a,b) des Moduls (114), das in Anspruch 1 definiert ist, wobei das Verfahren aufweist:
Verbinden der gegenüberliegenden Feder-Nut-Struktur (242, 244) von benachbarten Bereichen der Abschnitte (114a,b) entlang der Schnittstelle; und
Anbringen des Trägers (230, 232) an jedem der Abschnitte (114a,b) über die Schnittstelle durch Befestigen mit Befestigungen, wobei der Träger (230) die Feder-Nut-Struktur (242, 244) zusammenhält.

12. Verfahren nach Anspruch 11, wobei der Träger (230, 232) an jeder Platte (210) mit nicht mehr als zwei Befestigungen befestigt wird.

13. Verfahren nach Anspruch 11, wobei das Modul eine Außenseite aufweist und wobei ein Anbringen des Trägers ein Anbringen einer Vielzahl von Trägern über die Schnittstelle an der Außenseite aufweist.

14. Verfahren nach Anspruch 11, wobei ein Verbinden der Feder-Nut-Struktur des Weiteren ein Einführen eines Grats aufweist, der sich von einer Feder eines Abschnitts in einen Schlitz erstreckt, der in einer Nut des anderen Abschnitts angeordnet ist.

## Revendications

1. Module (100) pour une plateforme mobile (102), ayant un joint fendu (226), comprenant :
des première et seconde portions de module (114a, b) comprenant des panneaux(210a,b);
une interface entre les portions (114a, b) ;
un élément de réception (234, 236) couplé au panneau (210a) de la première portion (114a) ;
une poutrelle (230, 232) attachée au panneau (210b) de la seconde portion (114b) et s'étendant à partir de la seconde portion (114b), la poutrelle (230) étant configurée pour être insérée dans l'élément de réception (234, 236) et pour être attachée au panneau (210a) de la première portion pour fixation, par arrimage avec des éléments de fixation, à la poutrelle (230) entre les première et seconde portions à travers l'interface ainsi qu'à l'élément de réception (234, 236) à travers l'interface ; et
une structure à rainures et languettes d'imbrication (242, 244), disposée sur les première et seconde portions (114a, b) au niveau de l'interface, un raccordement de la poutrelle (230, 232) et de l'élément de réception (234, 236) provoquant l'imbrication de la structure à rainures et languettes (242, 244).

2. Module selon la revendication 1, dans lequel la poutrelle (230) comprend une pluralité de poutrelles (230, 232) et l'élément de réception (234, 236) comprend une pluralité d'éléments de réception (234, 236), les poutrelles (230, 232) pouvant être attachées entre les première et seconde portions (114a, b) et à un élément de réception (234, 236) respectif.

3. Module selon la revendication 2, dans lequel les première et seconde portions de module (114a, b) ont un extérieur, et les poutrelles (230, 232) et les éléments de réception (234, 236) sont disposés sur l'extérieur des première et seconde portions (114a, b).

4. Module selon la revendication 1, dans lequel la poutrelle (230, 232) et l'élément de réception (234, 236) comprennent une structure d'imbrication mâle-femelle.

5. Module selon la revendication 1, dans lequel la poutrelle (230, 232) est fixée à chaque portion (114a, b) et à l'élément de réception (234, 236) respectif avec pas plus de deux éléments de fixation.

6. Module selon la revendication 1, dans lequel les première et seconde portions de module (114a, b) comprennent des panneaux (210a, b) ayant des bords opposés, la structure à rainures et languettes d'imbrication (242, 244) comprenant des extrusions en métal (242, 244), liées aux bords opposés au niveau de l'interface.

7. Module selon la revendication 1, dans lequel la structure à rainures et languettes d'imbrication (242, 244) comprend en outre une crête (252), s'étendant vers l'extérieur à partir d'une languette (250) associée à une première des portions (114a), et une fente disposée dans une rainure (248) correspondante de la seconde des portions (114b), la fente étant configurée pour y recevoir la crête (252).

8. Module selon la revendication 1, dans lequel la structure à rainures et languettes d'imbrication (242, 244) comprend au moins deux languettes (250) et deux rainures (248) sur chacune des première et seconde portions (114a, b).

9. Module selon la revendication 1, destiné à être installé dans un aéronef ayant une porte (106).

10. Module selon la revendication 9, dans lequel le module (102) comprend une zone de repos de l'équipage, chaque portion de module (114a, b) étant dimensionnée pour passer par la porte (106) de l'aéronef (102) lorsque l'aéronef (102) est sensiblement assemblé.

11. Procédé de jonction des première et seconde portions (114a, b) du module (114) défini à la revendication 1, comprenant :
l'appariement de la structure à rainures et languettes (242, 244) opposée de sections adjacentes des portions (114a, b) le long de l'interface ; et
l'attache de la poutrelle (230, 232) à chacune des portions (114a, b) à travers l'interface, par arrimage avec des éléments de fixation, la poutrelle (230) maintenant la structure à rainures et languettes (242, 244) ensemble.

12. Procédé selon la revendication 11, dans lequel la poutrelle (230, 232) est fixée à chaque panneau (210) avec pas plus de deux éléments de fixation.

13. Procédé selon la revendication 11, dans lequel le module a un extérieur, et l'attache de la poutrelle comprend l'attache d'une pluralité de poutrelles à travers l'interface sur l'extérieur.

14. Procédé selon la revendication 11, dans lequel l'appariement de la structure à rainures et languettes comprend en outre l'insertion d'une crête, s'étendant à partir d'une languette d'une portion, dans une fente disposée dans une rainure de l'autre portion.
